# EUROPÄISCHE PATENTSCHRIFT

(11) **EP 4 090 149 B1**
(45) Veröffentlichungstag und Bekanntmachung des Hinweises auf die Patenterteilung: **24.05.2023**
(21) Anmeldenummer: 21717011.7
(22) Anmeldetag: 31.03.2021
(51) Int. Cl.: A01C 7/06, A01C 7/08, A01C 19/00, A01C 7/04, A01C 7/20

(54) **VERTEILMASCHINE**
SPREADING MACHINE
MACHINE D'ÉPANDAGE

(30) Priorität: 03.04.2020 DE 102020109343
(43) Veröffentlichungstag der Anmeldung: 23.11.2022
(73) Patentinhaber: Amazonen-Werke H. Dreyer SE & Co. KG, 49205 Hasbergen (DE)
(72) Erfinder: WIEN, Thomas, 28816 Stuhr (DE); LÜBBEN, Jan-Eike, 26188 Edewecht (DE); ARNOLD, Roland, 27777 Ganderkesee (DE)
(86) Internationale Anmeldenummer: PCT/EP2021/058520
(87) Internationale Veröffentlichungsnummer: WO 2021/198379

(56) Entgegenhaltungen:
- DE-A1-102017 216 623
- DE-U1-202012 013 691
- US-A1- 2015 189 827
- US-A1- 2016 050 842

## Beschreibung

Die Erfindung betrifft eine Verteilmaschine mit zumindest einem Saatgutbehälter, zumindest einem Düngerbehälter und einer Mehrzahl von Verteilaggregaten, wobei jedes der Verteilaggregate zumindest eine pneumatisch betriebene Vereinzelungseinrichtung, der ein Vereinzelungsluftstrom zuleitbar oder ableitbar ist, und eine Düngerapplikationseinrichtung aufweist, wobei die Verteilmaschine zur Bereitstellung von Saatgut aus dem Saatgutbehälter an die Verteilaggregate eine förderluftbetriebene Saatgutnachführeinrichtung und zur Bereitstellung von Dünger an die Düngerapplikationseinrichtungen eine energiebetriebene Düngerzuführeinrichtung aufweist.

Derartige, insbesondere als Einzelkornsämaschinen ausgeführt, Verteilmaschinen sind hinlänglich bekannt und weisen regelmäßig verschiedene Komponenten bzw. Verbraucher auf, die der Bereitstellung von Energie in Form von Druckluft oder hydraulischem Druckmittel bedürfen. Beispielhaft zu nennende Komponenten bzw. Verbraucher sind Vereinzelungseinrichtungen, welche zur Vereinzelung von Saatgut einen Vereinzelungsluftstrom benötigen, Saatgutnachführeinrichtungen, welche die Vereinzelungseinrichtungen aus einem zentralen Saatgutbehälter über einen Förderluftstrom mit Saatgut zur Vereinzelung versorgen, und Düngerzuführeinrichtungen, welche entweder gekörnten Dünger über Förderluft oder flüssigen Dünger mittels einer Pumpe fördern. Die pneumatisch betriebenen Vereinzelungseinrichtungen, denen der Vereinzelungsluftstrom zuleitbar oder ableitbar ist, arbeiten in an sich bekannter Weise: Im Falle einer überdruckbetriebenen Vereinzelungseinrichtung, wird der Vereinzelungsluftstrom von einem Gebläse mit Überdruck beaufschlagt, so dass das Saatgut in vereinzelter Weise an einem in der Vereinzelungseinrichtung gekapseltem Vereinzelungsorgan angepresst wird und so vereinzelt werden kann; im Falle einer unterdruckbetriebenen Vereinzelungseinrichtung, wird der Vereinzelungluftstrom von einem Gebläse mit Unterdruck beaufschlagt, so dass er aus der Vereinzelungseinrichtung abgesaugt wird und bei geeigneter Anordnung des Vereinzelungsorgans ebenfalls zur Vereinzelung genutzt werden kann. Eine Saatgutnachführeinrichtung wird regelmäßig verwendet wenn auf Verteilaggregaten der Verteilmaschine keine oder nur wenig voluminöse Saatgutbehälter angeordnet sind: Die Saatgutnachführeinrichtung fördert Saatgut von dem zentralen, voluminösen Saatgutbehälter über Rohrleitungen mittels des von einem Gebläse zu erzeugenden Förderluftstroms zu den einzelnen Vereinzelungseinrichtungen, so dass der Förderluftstrom sich in die Anzahl von Vereinzelungseinrichtungen einzelne Förderströme aufteilt. Gattungsgemäße Verteilmaschinen weisen ferner regelmäßig eine Düngerzuführeinrichtung auf, um zusätzlich zu dem Saatgut ferner Dünger zu verteilen: Die Düngerzuführeinrichtung ist mittels eines Gebläses oder einer Pumpe dazu eingerichtet, gekörnten oder flüssigen Dünger über ein entsprechendes Leitungssystem an Düngerapplikationseinrichtungen der Verteilaggregate zu fördern.

Bei bisher bekannten Verteilmaschinen sind sämtliche dieser Komponenten bzw. Verbraucher mit einem einzigen Energieversorger, der als Gebläse oder Pumpe ausgeführt ist, betrieben, was eine niedrige Energieeffizienz und interfunktionale Abhängigkeiten der Komponenten bzw. Verbraucher bedingt. So kann es zum Betrieb der Vereinzelungseinrichtungen, der Saatgutnachführeinrichtung und der Düngerzuführeinrichtung notwendig sein das als Energieversorger dienende Gebläse bei hoher Leistung zu betreiben, während der entstehende Förderstrom für einzelne Funktionen wieder zu drosseln ist. Daher resultiert eine mangelhafte Energieeffizienz. Ferner sind somit alle angeschlossenen Verbraucher untereinander abhängig von der vom Energieversorger bereitgestellten Gesamtleistung einerseits und von der von den einzelnen Verbrauchern abgenommenen Teilleistung, wodurch eine gezielte Steuerung der Einzelkomponenten erschwert ist.

Aus der Druckschrift DE 10 2017 216 623 A1 ist eine Saat- und Pflanzanlage mit einer Dosier- und Verteilungsanlage bekannt. Aus der Druckschrift US 2016/050842 A1 ist eine Verteileinrichtung für landwirtschaftliches Ausbringmaterial bekannt. Aus der Druckschrift US 2015/189827 A1 ist ein landwirtschaftliches Gerät mit einer Vorrichtung zum Zuführen von körnigem Material bekannt. Aus der Druckschrift DE 20 2012 013 691 U1 ist eine Sämaschine bekannt. Aus der Druckschrift DE 20 2019 107 077 U1 ist eine landwirtschaftliche Vorrichtung mit drei Druckluftzuführungen umfassenden Dosiervorrichtungen bekannt. Aus der Druckschrift DE 10 2016 204 433 A1 ist eine Reiheneinheit einer landwirtschaftlichen Maschine bekannt.

Die der Aufgabe zugrunde liegende Aufgabe besteht folglich darin, eine Verteilmaschine mit mehreren Verbrauchern weiterzubilden und die bekannten Nachteile zu vermeiden. Insbesondere soll die Energieeffizienz gesteigert und die Steuerbarkeit der an die Verbraucher bereitgestellten Energie verbessert werden.

Diese Aufgabe wird erfindungsgemäß durch eine Verteilmaschine mit den Merkmalen des unabhängigen Anspruchs 1 gelöst. Vorteilhafte Weiterbildungen sind Gegenstand der abhängigen Unteransprüche.

Erfindungsgemäß ist vorgesehen, dass die Verteilmaschine jeweils separate Gebläse aufweist, zur Bereitstellung der Vereinzelungsluftströme an die Vereinzelungseinrichtungen, der Förderluft an die Saatgutnachführeinrichtung, sowie der Energie an die Düngerzuführeinrichtung.

Die Steuerbarkeit der bereitgestellten Energie ist verbessert, da sich die separaten Gebläse vorzugsweise unabhängig voneinander bei unterschiedlichen Leistungen betreiben lassen. Somit sind auch die Funktionen von Vereinzelungseinrichtungen, Saatgutnachführung und Düngerzuführung weniger stark abhängig, wodurch ein verbessertes Arbeitsergebnis erreichbar ist.

Die erfindungsgemäße Verteilmaschine weist zur Bereitstellung der Vereinzelungsluftströme an die Vereinzelungseinrichtungen, der Förderluft an die Saatgutnachführeinrichtung, sowie der Energie an die Düngerzuführeinrichtung jeweils separate Gebläse auf. Dadurch, dass jedem der Verbraucher, also den Vereinzelungseinrichtungen, der Saatgutnachführeinrichtung und der Düngerzuführeinrichtung, ein separater Energieversorger zugeordnet ist, lassen sich die Energieversorger, also Gebläse, mit geeigneter Leistungsabgabe betreiben. Die Verteilmaschine weist somit eine besonders hohe Energieeffizienz auf. Ferner kann jedem Versorger die für sein, insbesondere aktuelles, Betriebsverhalten benötigte Leistung zur Verfügung gestellt werden, so dass keine interfunktionalen Abhängigkeiten mehr bestehen und das Arbeitsergebnis in zweckmäßiger Weise verbessert ist.

In einer weiteren vorteilhaften Weiterbildung der Verteilmaschine sind die separaten Gebläse unabhängig voneinander, vorzugsweise über ihre Drehzahl, steuerbar. Die Verteilmaschine kann hierzu eine Steuervorrichtung aufweisen. Die Steuervorrichtung ist signalleitend mit den Gebläsen verbunden und kann Teil einer Anzeige- und/oder Bedienvorrichtung sein. Die Steuervorrichtung kann ebenfalls eine mit der Anzeige- und/oder Bedienvorrichtung vorzugsweise signalleitend verbundene Rechnereinheit sein.

Alternativ oder zusätzlich sind die separaten Gebläse über eine Drossel regelbar.

Erfindungsgemäß sind in der Vereinzelungseinrichtung ein Vereinzelungsluftstrom und ein Förderluftstrom der Saatgutnachführeinrichtung zusammenführbar. Für den Fall, dass die Vereinzelungseinrichtung mit Überdruck betrieben ist, kann so in vorteilhafter Weise ein Teil des Vereinzelungsluftstroms durch den Förderluftstrom bereitgestellt werden. Besonders zweckmäßig ist hierbei, dass das Gebläse zur Bereitstellung des Vereinzelungsluftstroms somit mit geringerer Leistung betreibbar ist.

Um die Umwelt während des Betriebes der Verteilmaschine zu schonen, ist einer weiteren vorteilhaften Weiterbildung vorgesehen, dass Förderluft der Saatgutnachführeinrichtung mittels einer Vereinzelungseinrichtung ableitbar ist. Da das Saatgut regelmäßig mit umweltschädlicher Beize behaftet ist, welche sich während der Förderung zwischen Saatgutbehälter und Vereinzelungsvorrichtung lösen und von der Förderluft mitgerissen werden kann, kann die Förderluft infolge dieser Weiterbildung vorzugsweise bodennah abgeleitet werden. Das insbesondere bodennahe Ableiten von mit Beize belasteter Förderluft schont die Insekten im Umfeld der Verteilmaschine und ist damit der Umwelt zuträglich.

Eine weitere vorteilhafte Weiterbildung der erfindungsgemäßen Verteilmaschine zeichnet sich dadurch aus, dass die Vereinzelungseinrichtung einen Saatgutabgabekanal zur vereinzelten Abgabe von Saatgut aufweist, wobei das vereinzelte Saatgut in dem Saatgutabgabekanal durch den Vereinzelungsluftstrom und/oder zumindest teilweise durch die Förderluft der Saatgutnachführeinrichtung beschleunigt ist. Ein vereinzeltes Saatkorn wird nach Ablösen von einem Vereinzelungsorgan der Vereinzelungseinrichtung, wie beispielweise einer Vereinzelungsscheibe, in den Saatgutabgabekanal abgegeben. Die Vereinzelungseinrichtung kann so ausgeführt sein, dass der Vereinzelungsluftstrom und die Förderluft zumindest teilweise in den Saatgutabgabekanal geleitet wird, so dass die vereinzelten Saatkörner darin ggü. der Abgabe im freien Fall beschleunigt werden. Diese Weiterbildung weist besondere Synergie mit der Bereitstellung der Vereinzelungsluft und/oder der Förderluft über separate Energieversorger auf, da der zur Beschleunigung des Saatkorns zur Verfügung stehende Gesamtluftstrom somit besonders einfach und zweckmäßig steuerbar ist. Ferner gelingt so eine besonders einfach Anpassung der Beschleunigung bzw. Geschwindigkeit des Saatkorns an unterschiedliche Saatgüter und/oder Fahrgeschwindigkeiten.

Die Vereinzelungseinrichtung weist einen Saatgutabgabekanal zur vereinzelten Abgabe von Saatgut auf, wobei das vereinzelte, insbesondere im Saatgutabgabekanal beschleunigte, Saatgut mittels einer Fangrolle im Bereich der Abgabe aus dem Saatgutabgabekanal abbremsbar ist, so dass das vereinzelte Saatgut äquidistant ablegbar ist. Durch Abbremsen des vereinzelten Saatgutes von einer hohen Eigengeschwindigkeit, lässt sich die Ablagequalität verbessern. Vorzugsweise werden die vereinzelten Saatkörner von der Fangrolle zumindest annährend auf die Fahrtgeschwindigkeit der Verteilmaschine abgebremst, so dass eine Ablage möglichst ohne Verrollen des Saatkorns ermöglicht ist.

Die Fangrolle ist im Bereich der Abgabe aus dem Saatgutabgabekanal angeordnet, wobei das Saatkorn nach Austreten aus dem Saatgutabgabekanal von der Fangrolle überfahren und somit abgebremst wird. Das Saatgut wird von der Fangrolle zudem nach Art einer Saatgutandruckrolle im Boden angedrückt, was dem Saataufgang dienlich ist.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene Einzelkornsämaschine mit einer Mehrzahl von Verteilaggregaten in perspektivischer Ansicht, und
- Fig.2: eines der Verteilaggregate in Seitenansicht.

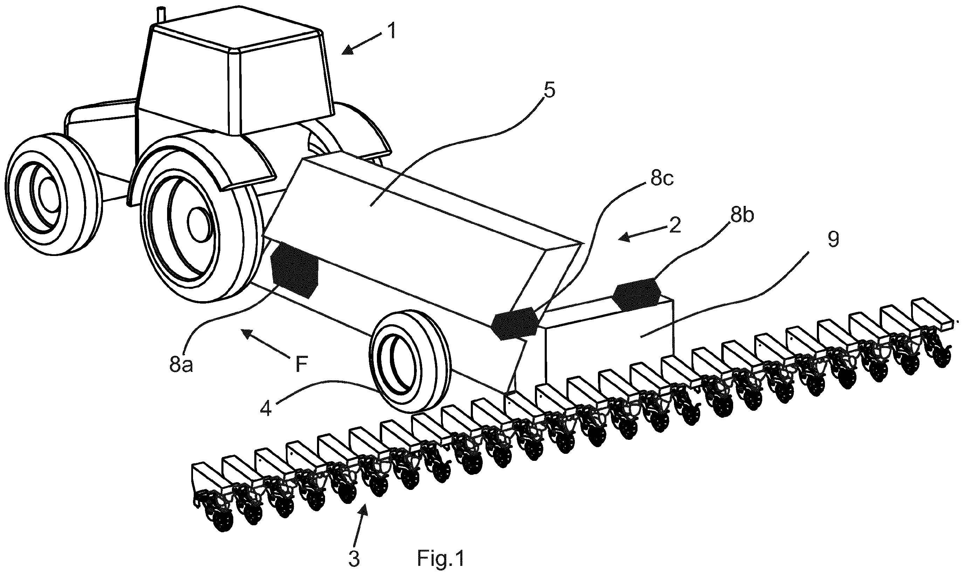

Eine hinter einem Ackerschlepper 1 angehangene und als Einzelkornsämaschine 2 ausgeführte Verteilmaschine ist in Fig.1 in perspektivischer Ansicht von schräg hinten zu sehen. Die Einzelkornsämaschine 2 weist an ihrem in Fahrtrichtung F hinteren Ende eine Mehrzahl von quer zur Fahrtrichtung F angeordneten Verteilaggregaten 3 und davor ein eigenes Fahrwerk 4 auf. Das Fahrwerk 4 weist zwei quer zur Fahrtrichtung F nebeneinander angeordnete Laufreifen auf und ist an einem Rahmenteil der Einzelkornsämaschine 2 befestigt, welcher sich im Wesentlichen in Fahrtrichtung F erstreckt, so dass die Einzelkornsämaschine 2 nach Art eines Anhängers mittels des Ackerschleppers 1 über eine landwirtschaftliche Fläche in der gezeigten Arbeitsstellung oder über Straßen und Wege in einer Transportposition verbringbar ist. Die gezeigte Arbeitsstellung der Einzelkornsämaschine 2 zeichnet sich dadurch aus, dass die Verteilaggregate 3, welche an einem lang gestreckten Rahmenteil der Einzelkornsämaschine 2 befestigt sind, quer zur Fahrtrichtung F nebeneinander angeordnet sind, so dass sich eine große Arbeitsbreite ergibt. Die Einzelkornsämaschine 2 ist somit besonders zur Bearbeitung großer Flächen eingerichtet, wo das Saatgut mittels einer pneumatisch betriebenen Vereinzelungseinrichtung 6 jedes Verteilaggregates 3 in vereinzelter Weise abgelegt wird. Jedes Verteilaggregat 3 umfasst zudem eine als Scheibenschar 7 ausgeführte Düngerapplikationseinrichtung zur gleichzeitigen Ausbringung von Dünger.

Um bei der Bearbeitung großer Flächen häufige Unterbrechungen der Bearbeitung zum Nachfüllen von Saatgut der einzelnen Verteilaggregate 3, wie es beispielsweise von getragenen Einzelkornsämaschinen 2 bekannt ist, zu vermeiden und dementsprechend eine hohe Schlagkraft zu erreichen, weist die Einzelkornsämaschine 2 einen voluminösen Saatgutbehälter 5 auf. Zur Bereitstellung des Saatgutes aus dem Saatgutbehälter 5 an die Verteilaggregate 3 ist eine Saatgutnachführeinrichtung vorgesehen. Über nicht näher dargestellte Saatgutleitungen verteilt die Saatgutnachführeinrichtung das Saatgut aus dem Saatgutbehälter 5 in einstellbarer Weise an die Verteilaggregate 3. Hierzu wird ein pneumatischer Förderluftstrom genutzt, welcher das Saatgut in den Saatgutleitungen transportiert und an die Vereinzelungseinrichtungen 6 der Verteilaggregate 3 bereitstellt. Die Einzelkornsämaschine 2 weist hierzu einen als Saatgutgebläse 8a ausgeführten, separaten Energieversorger auf, um den Förderluftstrom zu erzeugen. Die Saatgutnachführeinrichtung kann zudem ein Dosierelement umfassen, welches dazu eingerichtet ist, Saatgut in einstellbarer Menge aus dem Saatgutbehälter 5 zu entnehmen und in die nicht dargestellten Saatgutleitungen abzugeben wo es vom Förderluftstrom erfasst und transportiert wird. Alternativ kann die Saatgutnachführeinrichtung selbstregelnd ausgeführt sein, also ein Füllstandelement aufweisen, welches dazu eingerichtet ist, den Förderluftstrom bei Erreichen eines vorbestimmten Füllstandes selbsttätig zu unterbrechen. Die Saatgutleitungen können Absperrelemente aufweisen, so dass einstellbar ist, welchen der Verteilaggregaten 3 Saatgut zugeleitet wird.

An die Verteilaggregate 3 verteilt, wird das Saatgut den Vereinzelungseinrichtungen 6 zugeführt, welche bei dieser Einzelkornsämaschine 2 mit Überdruck betrieben sind. Den Vereinzelungseinrichtungen 6 jedes Verteilaggregates 3 ist jeweils ein gegenüber Atmosphärendruck unter Überdruck stehender Vereinzelungsluftstrom zuleitbar, der in an sich bekannter Weise dafür sorgt, dass einzelne Saatkörner an einer drehbar antreibbaren Vereinzelungsscheibe der Vereinzelungseinrichtung 6 anhaften und in regelmäßigen Abständen wieder in einen Saatgutabgabekanal abgegeben werden. Zur Bereitstellung der Vereinzelungsluftströme weist die Einzelkornsämaschine 2 einen als Vereinzelungsgebläse 8c ausgeführten, separaten Energieversorger auf. Das Vereinzelungsgebläse 8c ist auf dem in Fahrtrichtung F lang gestreckten Rahmenteil der Einzelkornsämaschine 2 angeordnet und über nicht näher dargestellte Leitungen mit den Vereinzelungseinrichtungen 6 verbunden. In einer nicht gezeigten Ausführungsform wäre denkbar, dass die Einzelkornsämaschine 2 mehrere Vereinzelungsgebläse 8c aufweist und/oder dass das oder die Vereinzelungsgebläse 8c an dem quer zur Fahrtrichtung F lang gestreckten Rahmenteil angeordnet ist bzw. sind. Das Vereinzelungsgebläse 8c ist unabhängig von dem Saatgutgebläse 8a steuerbar, also auch als separater Energieversorger zur Bereitstellung der Vereinzelungsluftströme zu bezeichnen.

Um auch Dünger in großer Menge mitführen zu können, weist die Einzelkornsämaschine 2 einen Düngerbehälter 9 auf. Zur Bereitstellung von Dünger aus dem Düngerbehälter 9 an die als Scheibenschare 7 ausgeführten Düngerapplikationseinrichtungen ist eine Düngerzuführeinrichtung vorgesehen. Über ebenfalls nicht näher dargestellte Düngemittelleitungen verteilt die Düngerzuführeinrichtung den Dünger aus dem Düngerbehälter 9 in einstellbarer Weise an die Scheibenschare 7. Hierzu wird bei dieser Einzelkornsämaschine 2 ebenfalls ein pneumatischer Förderluftstrom genutzt, welcher von einem als Düngemittelgebläse 8b ausgeführten Energieversorger erzeugbar ist. Das Düngemittelgebläse 8b ist unabhängig von dem Saatgutgebläse 8a und dem Vereinzelungsgebläse 8c steuerbar, also als separater Energieversorger zur Bereitstellung der Energie an die Düngerzuführeinrichtung zu betrachten. Folglich sind bei dieser Einzelkornsämaschine 2 das Saatgutgebläse 8a, das Düngemittelgebläse 8b und das Vereinzelungsgebläse 8c jeweils unabhängig voneinander steuerbar, also jeweils als separate Energieversorger zu bezeichnen. In einer nicht gezeigten Ausführungsform der Einzelkornsämaschine 2 wäre es denkbar zumindest zwei Verbraucher, also Vereinzelungsluftströme bzw. Vereinzelungseinrichtungen 6, Saatgutnachführeinrichtung und Düngerzuführeinrichtung, mit einem Energieversorger zu betreiben und den jeweils dritten Verbraucher mit einem separaten Energieversorger zu nutzen. Die Düngerzuführeinrichtung kann ein Dosierelement zur Entnahme von Dünger aus dem Düngerbehälter 9 in einstellbaren Mengen und Abgabe dieser in die Düngemittelleitungen aufweisen.

Der Saatgutbehälter 5 und der Düngerbehälter 9 können in ihrer Anordnung auf der Einzelkornsämaschine 2 vertauscht sein, so dass der Düngerbehälter 9 in Fahrtrichtung F vor dem Saatgutbehälter angeordnet ist. Die Volumina des Saatgutbehälters 5 und des Düngerbehälter 9 sind hierbei nahezu frei wählbar.

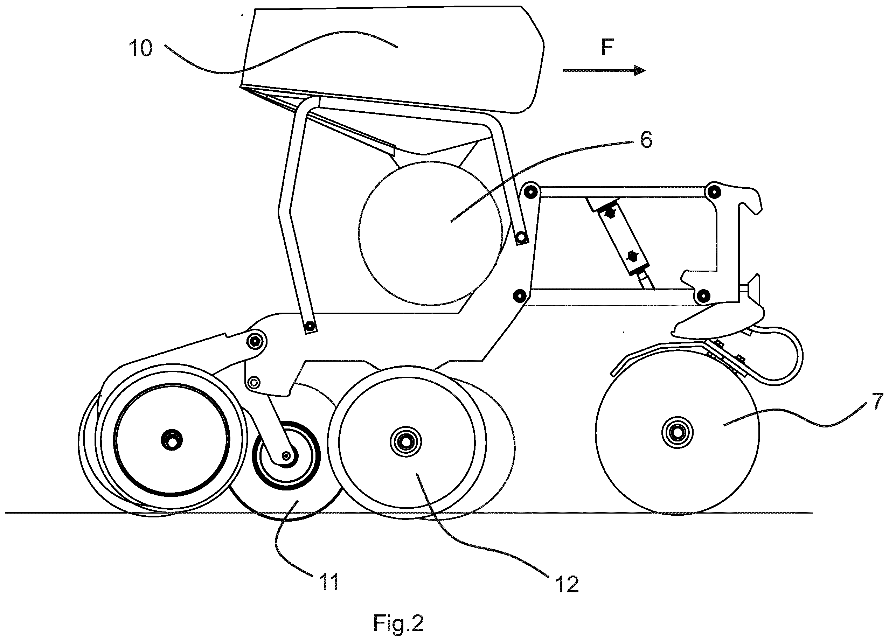

Das Saatgutgebläse 8a, das Düngemittelgebläse 8b und das Vereinzelungsgebläse 8c sind unabhängig voneinander jeweils über ihre Drehzahl steuerbar. So lassen sich die Saatgutnachführeinrichtung, die Düngerzuführeinrichtung und die Vereinzelungseinrichtungen 6 unabhängig voneinander betreiben bzw. selbige beeinflussen sich gegenseitig nicht in ihrer Funktion. Mittels des Saatgutgebläses 8a ist beispielsweise die Geschwindigkeit und/oder Menge des von dem Saatgutbehälter 5 an die Verteilaggregate 3 geförderten Saatgutes einstellbar. Bei dieser Einzelkornsämaschine 2 weisen die einzelnen Verteilaggregate 3 jeweils einen als Saatgutpuffer 10 dienenden Vorratsbehälter auf in dem sich von dem zentralen Saatgutbehälter 5 mittels des von dem Saatgutgebläse 8a erzeugten Förderluftstroms an das jeweilige Verteilaggregat 3 transportiertes Saatgut sammelt. Aus dem Saatgutpuffer 10 rutscht das Saatgut dann in die Vereinzelungseinrichtung 6, wie Fig.2 zeigt. Bei dieser Einzelkornsämaschine ist es also denkbar, dass Saatgutgebläse 8a in, vorzugsweise regelmäßigen, Intervallen zu betreiben, nämlich immer dann wenn zumindest ein Saatgutpuffer 10 mit Saatgut zu versorgen ist. Alternativ ist denkbar, dass das Saatgutgebläse 8a dauerhaft betrieben wird aber beispielsweise mit verringter Leistung, so dass in jedem Saatgutpuffer 10 stets eine ausreichende Menge an Saatgut zur Vereinzelung durch die Vereinzelungseinrichtungen 6 zur Verfügung steht. Jedenfalls kann das Saatgutgebläse 8c unabhängig von dem Betriebsverhalten der Düngerzuführeinrichtung und der Vereinzelungseinrichtungen mit für die Saatgutnachführeinrichtung benötigter Leistung betrieben werden, so dass es besonders effizient arbeitet.

In einer nicht gezeigten Ausführungsform der Einzelkornsämaschine 2 weisen die Verteilaggregate 3 keinen Saatgutpuffer 10 auf, so dass von der Saatgutnachführeinrichtung transportiertes Saatgut quasi direkt der Vereinzelungseinrichtung 6 bereitgestellt wird. Bei dieser Ausführungsform kann durch geeignete Steuerung des Saatgutgebläses 8a gewährleistet werden, dass stets genug Saatgut zur Vereinzelung vorhanden ist, weil das Saatgutgebläse 8a separat steuerbar ist, also unabhängig von den übrigen Energieversorgern 8b, 8c.

Mittels des Düngemittelgebläses 8b ist die Menge und/oder Geschwindigkeit des den Scheibenscharen 7 bereitgestellten Düngers aus dem Düngerbehälter 9 einstellbar. In vorteilhafter Weise lassen sich bei dieser Einzelkornsämaschine 2 das Saatgutgebläse 8a und das Düngemittelgebläse 8b unabhängig voneinander steuern, so dass die Saatgutnachführungeinrichtung und die Düngerzuführeinrichtung unabhängig voneinander einstellbar und betreibbar sind. Ferner sind mittels des Vereinzelungsgebläses 8c die Vereinzelungsluftströme in gefördertem Volumenstrom bzw. Druckerhöhung einstellbar, so dass beispielsweise die zur Vereinzelung mittels der Vereinzelungseinrichtungen 6 zur Verfügung stehende Druckdifferenz variiert werden kann. Da auch das Vereinzelungsgebläse 8c separat steuerbar ist, können die Vereinzelungsluftströme unabhängig von der Saatgutnachführeinrichtung und der Düngerzuführeinrichtung angepasst werden. Dies ist besonders vorteilhaft, da in der Vereinzelungseinrichtung 6 ein Vereinzelungsluftstrom und ein Förderluftstrom der Saatgutnachführeinrichtung zusammenführbar sind und der Vereinzelungsluftstrom und der Förderluftstrom so jeweils aneinander anpassbar bzw. aufeinander abzustimmen sind. Ferner ist die Förderluft der Saatgutnachführeinrichtung über die Vereinzelungseinrichtung 6 insbesondere in Richtung des bearbeiteten Bodens ableitbar.

Ein Verteilaggregat 3 in von dem quer zur Fahrtrichtung F lang gestreckten Rahmenteil der Einzelkornsämaschine 2 demontiertem Zustand ist in Fig.2 zu sehen. Das mittels der Saatgutnachführeinrichtung aus dem Saatgutbehälter 5 zum Verteilaggregat 3 transportierte Saatgut gelangt über die nicht dargestellten Saatgutleitungen zum Saatgutpuffer 10. In dem Saatgutpuffer 10 bevorratetes Saatgut steht der Vereinzelungseinrichtung 6 zur Vereinzelung zur Verfügung in die es unter Einfluss der Schwerkraft und/oder der Förderluft des Saatgutnachführsystems nachrutschen kann. Zur Vereinzelung wird der Vereinzelungseinrichtung 6 über ebenfalls nicht dargestellte Leitungen ein von dem Vereinzelungsgebläse 8c bereitgestellter Vereinzelungsluftstrom zugeleitet. Nachdem das Saatgut mit Hilfe bspw. einer Vereinzelungsscheibe vereinzelt wurde, wird es in den Saatgutabgabekanal abgelöst. Die in der Vereinzelungseinrichtung 6 zusammengeführten Vereinzelungsluftströme und Förderluftströme der Saatgutnachführeinrichtung treten zumindest teilweise über den Saatgutabgabekanal aus und beschleunigen darin abgelöste vereinzelte Saatkörner. In an sich bekannter Weise werden durch Bodenbearbeitungswerkzeuge 12, welche den Saatgutabgabekanal verdecken, eine Furche im Boden geöffnet in die die vereinzelten Körner aus dem Saatgutabgabekanal geschossen werden. Der Saatgutabgabekanal erstreckt sich folglich von dem Vereinzelungsorgan der Vereinzelungseinrichtung 6 bis in den Bereich der Bodenbearbeitungswerkzeuge 12. Um ein Verrollen der Saatkörner in der Furche zu verhindern, sind die Saatkörner mittels eines als Fangrolle 11 ausgeführten Energiereduzierungselements abbremsbar. Der Saatgutabgabekanal ist im Bereich der Abgabe so ausgerichtet, dass das Saatgut in einen Spalt zwischen der Fangrolle 11 und der Furche geschossen werden kann, so dass das vereinzelte Saatgut äquidistant abgelegt wird. Zusätzlich zu dem Saatgut kann über das Scheibenschar 7 von dem Düngerbehälter 9 mittels des Düngemittelgebläses 8b geförderter Dünger abgelegt werden.

### Bezugszeichenliste

- 1: Ackerschlepper
- 2: Einzelkornsämaschine
- F: Fahrtrichtung
- 3: Verteilaggregat
- 4: Fahrwerk
- 5: Saatgutbehälter
- 6: Vereinzelungseinrichtung
- 7: Scheibenschar
- 8a: Saatgutgebläse
- 8b: Düngemittelgebläse
- 8c: Vereinzelungsgebläse
- 9: Düngerbehälter
- 10: Saatgutpuffer
- 11: Fangrolle
- 12: Bodenbearbeitungswerkzeuge

## Patentansprüche

1. Verteilmaschine (2), insbesondere Einzelkornsämaschine (2), mit
- zumindest einem Saatgutbehälter (5),
- zumindest einem Düngerbehälter (9),
- einer Mehrzahl von Verteilaggregaten (3), wobei jedes der Verteilaggregate (3) zumindest eine pneumatisch mit Überdruck betriebene Vereinzelungseinrichtung (6), der ein unter Überdruck stehender Vereinzelungsluftstrom zuleitbar ist, und eine Düngerapplikationseinrichtung aufweist,
- einer förderluftbetriebenen Saatgutnachführeinrichtung zur Bereitstellung von Saatgut aus dem Saatgutbehälter (5) an die Verteilaggregate (3), wobei in der Vereinzelungseinrichtung (6) der Vereinzelungsluftstrom und ein Förderluftstrom der Saatgutnachführeinrichtung zusammenführbar sind,
- einer energiebetriebenen Düngerzuführeinrichtung zur Bereitstellung von Dünger an die Düngerapplikationseinrichtungen,
- jeweils separaten Gebläsen (8a, 8b, 8c) zur Bereitstellung der Vereinzelungsluftströme an die Vereinzelungseinrichtungen (6), der Förderluft an die Saatgutnachführeinrichtung, sowie der Energie an die Düngerzuführeinrichtung;
- einem Saatgutabgabekanal zur vereinzelten Abgabe von Saatgut; und
- einer Fangrolle (11), welche im Bereich der Abgabe aus dem Saatgutabgabekanal angeordnet und dazu eingerichtet ist, das Saatkorn nach Austreten aus dem Saatgutabgabekanal zu überfahren und somit abzubremsen.

2. Verteilmaschine (2) nach Anspruch 1, **dadurch gekennzeichnet, dass** die separaten Gebläse (8a, 8b, 8c) unabhängig voneinander, vorzugsweise über ihre Drehzahl und/oder eine Drossel, steuerbar sind.

## Claims

1. A spreading machine (2), in particular a precision seed sowing machine (2), comprising
- at least one seed hopper (5),
- at least one fertilizer hopper (9),
- a plurality of spreading units (3), wherein each of the spreading units (3) has at least one separating device (6) which is operated pneumatically using overpressure and to which a separating air flow under overpressure can be supplied, and a fertilizer application device,
- a conveying air-operated seed feed device for providing seed from the seed hopper (5) to the spreading units (3), wherein the separation air flow and a conveying air flow of the seed feed device can be combined in the separating device (6),
- an energy-operated fertilizer supply device for providing fertilizer to the fertilizer application devices,
- separate fans (8a, 8b, 8c) for providing the separating air flows to the separating devices (6), the conveying air to the seed feed device and the energy to the fertilizer supply device, respectively;
- a seed dispensing channel for dispensing seeds individually; and
- a press wheel (11) which is arranged in the dispensing region out of the seed dispensing channel and is designed to transfer the seed grain after exiting the seed dispensing channel and thus to brake it.

2. The spreading machine (2) according to claim 1, **characterized in that** the separate fans (8a, 8b, 8c) can be controlled independently of one another, preferably via their rotational speed and/or a throttle.

## Revendications

1. Machine d'épandage (2), en particulier semoir monograine (2), comportant
- au moins un réservoir de semences (5),
- au moins un réservoir d'engrais (9),
- une pluralité d'unités d'épandage (3), chacune des unités d'épandage (3) présentant au moins un dispositif de séparation (6) fonctionnant par surpression pneumatique, lequel dispositif peut être amené vers un flux d'air de séparation en surpression, et un dispositif d'application d'engrais,
- un dispositif de suivi de semences fonctionnant à l'air de transport et destiné à la fourniture de semences aux unités d'épandage (3) à partir du réservoir de semences (5), le flux d'air de séparation et un flux d'air de transport du dispositif de suivi de semences pouvant être fusionnés dans le dispositif de séparation (6),
- un dispositif d'acheminement d'engrais à fonctionnement énergétique pour la fourniture d'engrais aux dispositifs d'application d'engrais,
- des ventilateurs respectivement séparés (8a, 8b, 8c) pour la fourniture des flux d'air de séparation aux dispositifs de séparation (6), de l'air de transport au dispositif de suivi de semences ainsi que de l'énergie au dispositif d'acheminement d'engrais ;
- un canal de distribution de semences pour la distribution individuelle de semences ; et
- une roue de fermeture (11) disposée dans la zone de la distribution à partir du canal de distribution de semences et conçue pour écraser la graine après sa sortie du canal de distribution de semences, et ainsi la ralentir.

2. Machine d'épandage (2) selon la revendication 1, **caractérisée en ce que** les ventilateurs séparés (8a, 8b, 8c) peuvent être commandés indépendamment les uns des autres, de préférence par l'intermédiaire de leur vitesse de rotation et/ou d'un étranglement.
